Europäisches Patentamt

European Patent Office

Office européen des brevets

(11) Veröffentlichungsnummer: **0 328 928**
**A2**

# EUROPÄISCHE PATENTANMELDUNG

(21) Anmeldenummer: **89101605.7**

(22) Anmeldetag: **31.01.89**

(51) Int. Cl.⁴: **B60T 13/62**

(30) Priorität: **15.02.88 DE 3804734**

(43) Veröffentlichungstag der Anmeldung:
**23.08.89 Patentblatt 89/34**

(84) Benannte Vertragsstaaten:
**AT CH DE FR IT LI**

(71) Anmelder: **KNORR-BREMSE AG**
**Moosacher Strasse 80 Postfach 401060**
**D-8000 München 40(DE)**

(72) Erfinder: **Bogner, Walter**
**Pfaffenbergengasse 7/3/6**
**A-1140 Wien(AT)**

(54) **Direkte Lokbremse.**

(57) Die direkte Lokbremse weist einen zwischen das direkte Führerbremsventil (12) und ein andererseits mit einer indirekten Bremsdrucksteuervorrichtung (3,4,5,8) verbundenes Doppelrückschlagventil (7) eingeordneten Druckübersetzer (14) auf. Der Bremszylinder (10) ist an den Ausgang des Doppelrückschlagventils (7) angeschlossen. Der Druckübersetzer (14) ist in seinem Übersetzungsverhältnis fahrgeschwindigkeitsabhängig umschaltbar ausgebildet, derart, daß er bei hoher Fahrgeschwindigkeit dem Doppelrückschlagventil (7) und damit dem Bremszylinder (10) eine den Aussteuerdruck des direkten Führerbremsventils (12) übersteigende Druckhöhe, bei niedriger Fahrgeschwindigkeit dagegen eine dem erwähnten Aussteuerdruck etwa gleiche Druckhöhe zuführt.

Durch den Druckübersetzer (14) wird bei gleicher Betätigung des direkten Führerbremsventils (12) eine etwa gleichmäßige Abbremsung der Lok bei hoher und auch niedriger Fahrgeschwindigkeit, trotz sich ändernder Reibwerte an der Reibungsbremse, erreicht. Hierdurch wird die Bremsenbedienung der Lok insbesondere bei Überstellfahrten mit hohen Geschwindigkeiten erleichtert.

## Direkte Lokbremse

Die Erfindung betrifft eine direkte Lokbremse, umfassend ein direktes Führerbremsventil zum direkten Steuern eines über wenigstens ein Doppelrückschlagventil wenigstens einem Bremszylinder zuzuführenden Bremsdruckes, wobei ein zweiter Eingang jedes Doppelrückschlagventils mit einer üblichen, indirekten Bremsdrucksteuervorrichtung in Verbindung steht.

Eine derartige Lokbremse ist beispielsweise aus der DE-PS 11 42 382 bekannt.

Bei Überstellfahrten von Lokomotiven, wenn diese in Alleinfahrt größere Entfernungen mit hoher Geschwindigkeit zurücklegen müssen, wird zur Bremssteuerung gerne das direkte Führerbremsventil benutzt, um die Funktion der indirekten Bremssteuerung für die Lok zugehörender Sondereinrichtungen, wie beispielsweise von Rückhalteventilen, zu umgehen. Außerdem erlaubt die direkte Bremse einen wesentlich rascheren Bremsdruckauf- und -abbau für die Lokbremse als die indirekte Bremse, wodurch eine raschere Bremsdruckregelung möglich ist. Die Betätigung des direkten Führerbremsventils muß dabei zum Berücksichtigen der sich fahrgeschwindigkeitsabhängig ändernden Reibwerte entsprechend der jeweiligen Fahrgeschwindigkeit erfolgen. Als besonders schwerwiegender Mangel ist anzusehen, daß die bekannten, direkten Lokbremsen nur für Abbremsungen aus Fahrgeschwindigkeiten unterhalb des Rapidbereiches, den beispielsweise Schnellzüge erreichen, geeignet sind, da sie keine "Rapid"-Einstellmöglichkeit besitzen, wie sie für die indirekte Bremse mit hierbei gesteigerter Bremsdruckänderungsgeschwindigkeit und gesteigerten Bremsdruckhöhen bekannt ist. Die Fahrgeschwindigkeit bei Überstellfahrten wird hierdurch begrenzt, es ergeben sich relativ lange Fahrzeiten mit entsprechend langen Belegungszeiten für die Fahrstrekken, wodurch andere Fahrten, beispielsweise von Schnellzügen, beachtlich behindert werden können.

Es ist demgemäß Aufgabe der Erfindung, eine direkte Lokbremse der eingangs genannten Art derart auszubilden, daß sie keine Beschränkung der Fahrgeschwindigkeit einer alleinfahrenden Lok auf unterhalb des Rapidbereiches liegende Geschwindigkeitswerte erfordert und daß die Betätigung des direkten Führerbremsventils in vereinfachter Weise ohne Berücksichtigung der augenblicklichen Fahrgeschwindigkeit möglich ist.

Diese Aufgabe wird nach der Erfindung dadurch gelöst, daß zwischen das direkte Führerbremsventil und jedes Doppelrückschlagventil ein in seinem Übersetzungsverhältnis in Abhängigkeit von der Fahrgeschwindigkeit der Lok umschaltbarer Druckübersetzer eingeschaltet ist, der bei hoher Fahrgeschwindigkeit einen hohen und bei niedriger Fahrgeschwindigkeit einen niedrigen Bremsdruck aussteuert.

In den Unteransprüchen sind nach der weiteren Erfindung vorteilhafte, weitere Ausbildungsmöglichkeiten für eine gemäß den vorstehend genannten Merkmalen ausgebildete Lokbremse angegeben.

Für kombinierte direkte und indirekte Zugbremsen ist es gemäß der DE-PS 11 30 840 bereits bekannt, die Druckführung in einer den Zug durchsetzenden, direkten Bremsleitung vermittels eines Druckübersetzers in Abhängigkeit von der Belastung der Schienenfahrzeuge zu steuern. Diese Druckluftbremseinrichtung ist jedoch für Lokomotiven ungeeignet, da deren Last sich nicht ändert.

Aus der DE-PS 678 196 und 16 05 264 ist es für ausschließlich indirekt wirkende Druckluftbremsen bekannt, einen fahrgeschwindigkeitabhängig betätigbaren Regler vorzusehen, mittels welchem ein in seinem Übersetzungsverhältnis umschaltbarer Druckübersetzer derart angesteuert wird, daß dieser bei hoher Fahrgeschwindigkeit einen hohen, bei niedriger Fahrgeschwindigkeit dagegen einen niedrigen Bremsdruck zu einem Bremszylinder aussteuert.

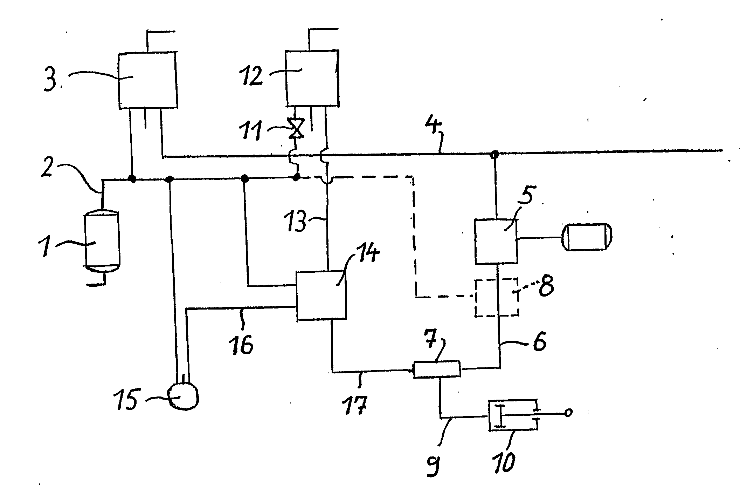

In der Zeichnung ist ein Ausführungsbeispiel für eine nach der Erfindung ausgebildete Lokbremse schematisch dargestellt.

Von einem als Druckluftquelle dienenden Hauptbehälter 1 führt eine Rohrleitung 2 zu einem gegebenenfalls mit einem Relaisventil kombinierten, indirekten Führerbremsventil 3. Vom Führerbremsventil 3 geht eine Hauptluftleitung 4 aus, welche sich in nicht dargestellter Weise durch einen ganzen, mit der Lok gekoppelten Zug erstreckt. An die Hauptluftleitung 4 ist in der Lok ein ein- oder mehrlösiges Bremssteuerventil 5 angeschlossen, dessen Ausgang durch eine Rohrleitung 6 mit einen Eingang eines Doppelrückschlagventils 7 in Verbindung steht. In die Rohrleitung 6 kann, wie gestrichelt eingezeichnet, ein ein- oder mehrstufiger Druckübersetzer 8 eingeordnet sein. An den Ausgang des Doppelrückschlagventils 7 ist vermittels einer Rohrleitung 9 ein Bremszylinder 10 angeschlossen.

Weiterhin ist an die Rohrleitung 2 über ein den Speisedruck minderndes Druckminderventil 11 ein direktes Führerbremsventil 12 angeschlossen, dessen Ausgangsleitung 13 zum Steuereingang eines Druckübersetzers 14 führt. Der Druckübersetzer 14 ist aus der Rohrleitung 2 mit Druckluft versorgt. Weiterhin ist an die Rohrleitung 2 ein Schaltventil 15 angeschlossen, welches in Abhängigkeit von der Fahrgeschwindigkeit der Lok gesteuert in eine Steuerleitung 16 bei niedriger Fahrgeschwindigkeit den Druck der Rohrleitung 2 und bei hoher Fahrgeschwindigkeit Atmosphärendruck einsteuert. Die Steuerleitung 16 führt zum Druckübersetzer 14; der Druckübersetzer 14 ist zweistufig ausgebildet, sein Übersetzungsverhältnis wird in Abhängigkeit von der Druckführung der Steuerleitung 16 umgeschaltet, und zwar steuert der Druckübersetzer 14 in seine Ausgangsleitung 17 bei Druckführung in der Steuerleitung 16 etwa im Verhältnis 1:1 die gleiche Druckhöhe aus, wie sie ihm durch die Ausgangsleitung 13 zugeführt wird, bei Atmosphärendruck in der Steuerleitung 16 dagegen steuert der Druckübersetzer 14 in die Ausgangsleitung 17 einen etwa im Verhältnis 1:1,8 über dem Drucknivau in der Ausgangsleitung 13 liegenden Druck aus. Die Ausgangsleitung 17 führt zu einem weiteren Eingang des Doppelrückschlagventils 7.

Es kann zweckmäßig sein, den Druckübersetzer 14 beispielsweise gemäß den erwähnten DE-PS 678 196 oder 16 05 264 auszubilden, er kann jedoch auch in anderer, bekannter Art ausgestaltet sein. Das Schaltventil 15 kann in Anlehnung an die Darstellung der DE-PS 678 196 in Art eines Fliekraftreglers oder ebenfalls in anderer, bekannter Weise ausgeführt sein. In Abänderung hierzu kann der Druckübersetzer 14 auch in Abhängigkeit einer anderweitig ermittelten Fahrgeschwindigkeit der Lok, insbesondere von vorzugsweise elektrischen Tachometersignalen, in seinem Übersetzungsverhältnis umschaltbar ausgebildet sein.

Es ist ersichtlich, daß die Lok- und auch die Zugbremse bei Betätigen des indirekten Führerbremsventils 3 und damit Absenken des in der Hauptluftleitung 4 bei gelösten Bremsen herrschenden Regeldruckes in üblicher und bekannter Weise arbeiten, wobei das Bremssteuerventil 5 einen Bremsdruck, gegebenenfalls durch den Druckübersetzer 8 übersetzt, durch das Doppelrückschlagventil 7 unter Absperren der Ausgangsleitung 17 in den Bremszylinder 10 ein-und aussteuert.

Das direkte Führerbremsventil 12 kann stellungsabhängig und damit druckerhaltend ausgebildet sein, so daß es in seine Ausgangsleitung 13 eine je nach seiner Einstellung zwischen Atmosphärendruck und der durch das Druckminderventil 11 begrenzten Druckhöhe liegenden Bremsdruck einsteuert. Das direkte Führerbremsventil 12 kann jedoch auch digital zu betätigende Ein- und Auslaßventile aufweisen, wodurch der Druck in der Ausgangsleitung 13 durch die Betätigungszeit dieser Ventile gesteuert wird; auch hierbei wird die maximal in die Ausgangsleitung 13 einsteuerbare Druckhöhe durch das Druckminderventil 11 begrenzt.

Wird das direkte Führerbremsventil 12 während einer eine gewisse Geschwindigkeitsgrenze übersteigenden Fahrgeschwindigkeit der Lok betätigt, so hält das Schaltventil 15 die Steuerleitung 16 entlüftet und den Druckübersetzer 14 damit auf ein hohes Übersetzungsverhältnis eingestellt; der Druckübersetzer 14 steuert daher in seine Ausgangsleitung 17 einem um seinen Proportionalitätsfaktor, beispielsweise den vorstehenden erwähnten Faktor 1,8, gegenüber dem ihm durch die Ausgangsleitung 13 zugeführten Druck erhöhten Druck aus. Über das Doppelrückschlagventil 7 wird dieser Druck dem Bremszylinder 10 zugeführt und bewirkt eine dementsprechend starke Abbremsung der Lokomotive. Unterschreitet die Fahrgeschwindigkeit der Lok die erwähnte Geschwindigkeitsgrenze, so schaltet das Schaltventil 15 und beaufschlagt die Steuerleitung 16 aus der Rohrleitung 2, der Druckübersetzer 14 schaltet daher auf ein niedriges Übersetzungsverhältnis von beispielsweise wie vorstehend erwähnt 1:1 um, wobei er in die Ausgangsleitung 17 etwa die gleiche Druckhöhe aussteuert, wie sie ihm die Ausgangsleitung 13 zuführt. Der im Bremszylinder 10 herrschende Druck wird daher durch den Druckübersetzer 14 zum Teil abgebaut, wodurch die Zuspannkraft der Bremsen gemindert wird; da jedoch bei niedriger Fahrgeschwindigkeit der Reibwert der Bremsen steigt, bleib die Höhe der Abbremsung der Lok nahezu konstant bestehen.

Bei Betätigen des direkten Führerbremsventils 12 während die erwähnte Geschwindigkeitsgrenze unterschreitender Fahrgeschwindigkeit der Lok ist der Druckübersetzer 14 selbstverständlich von Anfang an auf sein niedriges Übersetzungsverhältnis eingestellt, der Bremszylinder 10 wird somit von Anfang an von einer niedrigen, auch in der Ausgangsleitung 13 herrschenden Druckhöhe beaufschlagt.

In übrigen arbeitet die direkte Bremse der Lok in bekannter Weise.

In Abänderung von dargestellten und beschriebenen Ausführungsbeispiel ist es möglich, das Druckminderventil 11 in das direkte Führersbremsventil 12 zu integrieren. Insbesondere bei Drehgestellokomotiven kann es zweckmäßig sein, wenn jedem Drehgestell ein an die Ausgangsleitungen 17 und 6 angeschlossenes Doppelrückschalgventil 7 zugeordnet ist, wobei jede der entsprechend mehreren Rohrleitungen 9 zu mehreren, je einer Fahrzeugachse zugeordneten Bremszylindern 10 führen kann.

In weiterer Abänderung kann anstelle des dargestellten, pneumatischen, direkten Führerbremsventils 12 eine elektropneumatische Anordnung bekannter Bauart vorgesehen sein.

### Bezugszeichenliste

1 Hauptbehälter

2 Rohrleitung
3 indirektes Führerbremsventil
4 Hauptleitung
5 Bremssteuerventil
6 Rohrleitung
7 Doppelrückschlagventil
8 Druckübersetzer
9 Rohrleitung
10 Bremszylinder
11 Druckminderventil
12 direktes Führerbremsventil
13 Ausgangsleitung
14 Druckübersetzer
15 Schaltventil
16 Steuerleitung
17 Ausgangsleitung

**Ansprüche**

1. Direkte Lokbremse, umfassend ein direktes Führungsbremsventil (12) zum direkten Steuern eines über wenigstens ein Doppelrückschlagventil (7) wenigstens einen Bremszylinder (10) zuzuführenden Bremsdruckes, wo bei ein zweiter Eingang jedes Doppelrückschlagventils (7) mit einer üblichen indirekten Bremsdrucksteuervorrichtung in Verbindung steht, dadurch gekennzeichnet, daß zwischen das direkte Führerbremsventil (12) und jedes Doppelrückschlagventil (7) ein in seinem Übersetzungsverhältnis in Abhängigkeit von der Fahrgeschwindigkeit der Lok umschaltbarer Druckübersetzer (14) eingeschaltet ist, der bei hoher Fahrgeschwindigkeit einen hohen und bei niedriger Fahrgeschwindigkeit einen niedrigen Bremsdruck aussteuert.

2. Lokbremse nach Anspruch 1, wobei das direkte Führerbremsventil (12) aus einer Druckluftquelle (1) über ein Druckminderventil (11) mit einer geminderten Druckhöhe gespeist ist, dadurch gekennzeichnet, daß der aus der Druckluftquelle (1) mit ungeminderter Druckhöhe gespeiste Druckübersetzer (14) bei hoher Fahrgeschwindigkeit einen höheren Bremsdruck als das direkte Führbremsventil (12) bei niedriger Fahrgeschwindigkeit einen etwa gleich hohen Bremsdruck wie das direkte Führerbremsventil (12) aussteuert.

3. Lokbremse nach Anspruch 2, dadurch gekennzeichnet, daß das Übersetzungsverhältnis des Druckübersetzers (14) bei hoher Fahrgeschwindigkeit etwa 1:1,8, bei niedriger Fahrgeschwindigkeit etwa 1:1 beträgt.